# EUROPÄISCHE PATENTSCHRIFT

(11) **EP 4 163 216 B1**
(45) Veröffentlichungstag und Bekanntmachung des Hinweises auf die Patenterteilung: **17.09.2025**
(21) Anmeldenummer: 22198709.2
(22) Anmeldetag: 29.09.2022
(51) Int. Cl.: B65B 61/00

(54) **SAUGDÜSE**
SUCTION NOZZLE
BUSE D'ASPIRATION

(30) Priorität: 07.10.2021 DE 102021126070
(43) Veröffentlichungstag der Anmeldung: 12.04.2023
(73) Patentinhaber: MULTIVAC Sepp Haggenmüller SE & Co. KG, 87787 Wolfertschwenden (DE)
(72) Erfinder: Schaub, Hubert, 87448 Waltenhofen (DE); Wägele, Markus, 87763 Lautrach (DE); Lutz, Florian, 87733 Markt Rettenbach (DE); Reichart, Nadine, 87541 Unterjoch/Bad Hindelang (DE)
(74) Vertreter: Grünecker Patent- und Rechtsanwälte PartG mbB

(56) Entgegenhaltungen:
- EP-A1- 3 476 534
- DE-A1- 102011 100 680
- DE-A1- 102016 004 961
- DE-C2- 19 850 081
- JP-A- H11 151 537

## Beschreibung

Die Erfindung bezieht sich auf eine Saugdüse zum Ansaugen eines Folienrests, die an einer Verpackungsmaschine einsetzbar ist.

Es sind Verpackungsmaschinen bekannt, die aus einer oder mehreren, häufig bahnförmigen, Folien Verpackungen herstellen. Insbesondere beim Vereinzeln der fertigen Verpackungen fallen Folienreste an, die von den fertigen Verpackungen separiert und entsorgt werden müssen. Dies kann, wie z. B. in der DE 10 2011 010 378 B4 offenbart, durch einen Aufwickler erfolgen, der Folienreste auf Wickelwalzen aufwickelt. Solche Lösungen eignen sich jedoch nur für kontinuierliche, bspw. streifenförmige. Folienreste. Alternativ sind Absaugvorrichtungen, wie z. B. die in der DE 10 2006 020 367 A1 offenbarte, bekannt, die an sogenannte Randstreifenausbringungen angeschlossen werden, wie sie bspw. in DE 10 2010 053 444 A1 offenbart sind. Aufgrund der zum Absaugen genutzten Vakuumgebläse und entsprechender Antriebe sind konventionelle Absaugungsvorrichtungen relativ teuer und beanspruchen viel Platz.

Die EP 3476534 A1 und die DE 102016004961 A1 offenbaren Düsen gemäss Oberbegriff von Anspruch 1, wobei die beabsichtigten Anwendungen keine Verpackungsmaschinen sind.

Es ist eine Aufgabe der vorliegenden Erfindung, eine Saugdüse anzugeben, die eine Folienrestentsorgung ermöglicht, welche kostengünstig und platzsparend ist. Diese Aufgabe wird durch eine Saugdüse mit den Merkmalen des Anspruchs 1 gelöst.

Es wird eine Saugdüse offenbart, die zum Ansaugen eines Folienrests einer durch eine Verpackungsmaschine verarbeiteten Folie konfiguriert ist. Die Saugdüse umfasst eine Rohranordnung, die ein erstes Rohr und ein zweites Rohr umfasst, wobei das erste und das zweite Rohr koaxial zueinander angeordnet sind und einen Saugkanal bilden. Die offenbarte Saugdüse zeichnet sich dadurch aus, dass zwischen dem ersten und dem zweiten Rohr ein Ringspalt vorgesehen ist, durch welchen ein Gas, vorzugsweise Luft, in den Saugkanal einblasbar ist. Die Breite des Ringspaltes ist einstellbar.

Der Ringspalt, durch den ein Gas, insbesondere Luft, in den Saugkanal einblasbar ist, kann eine Erzeugung einer Druckdifferenz ermöglichen, die einen durch den Saugkanal verlaufenden Gasstrom, insbesondere einen Luftstrom, verursachen kann. Dadurch können Folienreste in die Saugdüse einsaugbar sein. Das Einblasen des Gases, insbesondere der Luft, kann durch eine Druckgasquelle, insbesondere eine Druckluftquelle, erfolgen und/oder unterstützt werden. Als Druckluftquelle kommen z.B. ein Kompressor oder eine zentrale Druckluftversorgung in Frage. Im Vergleich zum Stand der Technik kann auf diese Art eine besonders kostengünstige und platzsparende Absaugung erreicht werden.

Als Ringspalt kann eine Öffnung zwischen den Rohren angesehen werden, die sich umlaufend um den Saugkanal herum erstreckt. Es kann sich dabei um eine durchgängige Öffnung handeln, das kann heißen, dass das erste und das zweite Rohr an dieser Stelle komplett voneinander getrennt sind.

Als Rohr oder rohrförmig können Strukturen angesehen werden, die einen Kanal bilden, der zumindest abschnittsweise umlaufend durch eine Wand von seiner Umgebung abgetrennt ist. Eine bevorzugte Querschnittsform ist dabei eine kreisförmige Form. Andere runde oder eckige Querschnittsformen sind jedoch ebenfalls denkbar.

Es ist denkbar, dass der Ringspalt derart konfiguriert ist, dass ein eingeblasener Luftstrom in einer Einblasrichtung in den Saugkanal einblasbar ist, die in einem Einblaswinkel zu einer Axialrichtung der Rohranordnung orientiert ist, wobei der Winkel zwischen 0 Grad und 90 Grad, besonders bevorzugt zwischen 0 Grad und 45 Grad beträgt. Durch einen relativ zu der Axialrichtung möglichst kleinen Winkel kann erreicht werden, dass der durch den eingeblasenen Luftstrom hervorgerufene Luftstrom durch den Saugkanal in die gewünschte Richtung gerichtet ist. Eine Richtung die parallel zu einer gemeinsamen Achse der koaxial zueinander angeordneten Rohre verläuft kann als Axialrichtung, insbesondere als eine Axialrichtung der Rohranordnung, angesehen werden.

Vorteilhafterweise kann eine Querschnittsfläche des Saugkanals entlang eines Saugweges variieren. Dadurch kann der Strömungsverlauf und/oder die Strömungsgeschwindigkeit gezielt beeinflusst werden. Besonders günstig ist es, wenn eine Querschnittsfläche des Saugkanals an einer Auslassseite der Saugdüse kleiner ist als an einer Einlassseite der Saugdüse. Durch so eine Konfiguration kann der Venturi-Effekt genutzt werden, bspw. um einen gewünschten Druckunterschied zu erzeugen oder zu verstärken. Dadurch kann eine verbesserte Saugwirkung der Saugdüse erreicht werden

Es ist vorstellbar, dass die Saugdüse einen Druckgasanschluss, vorzugsweise einen Druckluftanschluss, aufweist. In vielen Produktionsumgebungen, in denen Saugdüsen an Verpackungsmaschinen eingesetzt werden, ist eine zentrale Druckluftversorgung vorhanden, sodass ein Betrieb der Saugdüse durch den Anschluss an eine Druckgas- bzw. Druckluftversorgung eine besonders einfach und praktisch zu realisierende Lösung darstellt. Darüber hinaus verfügen viele Verpackungsmaschinen über pneumatische Systeme. Daher kann es vorteilhaft sein, wenn die hier offenbarte Saugdüse an deren Druckgas- bzw. Druckluftversorgung anschließbar ist. Besonders günstig ist es, wenn der Druckgasanschluss, vorzugsweise gasdicht, mit dem Ringspalt verbunden ist und dazu konfiguriert ist, ein Gas, insbesondere Luft; zu dem Ringspalt zu leiten. So kann das Druckgas bzw. die Druckluft durch den Ringspalt in den Saugkanal einblasbar sein.

Erfindungsgemäss ist eine Breite des Ringspaltes einstellbar. Insbesondere bei konstantem Versorgungsdruck, bspw. durch die Druckluftversorgung, kann dadurch eine Einstellbarkeit der Einblasgeschwindigkeit in den Saugkanal einstellbar sein. Zusätzlich können Fertigungstoleranzen durch Anpassen der Breite des Ringspaltes ausgleichbar sein. Besonders günstig ist es, wenn die Breite des Ringspaltes durch axiales Verschieben des ersten und des zweiten Rohres relativ zueinander einstellbar ist. Dies kann eine besonders einfache Art der Einstellung der Breite des Ringspaltes darstellen. Durch axiales Verschieben kann insbesondere die axiale Breite des Ringspaltes einstellbar sein. Es ist jedoch vorstellbar, dass zusätzlich oder alternativ die radiale Breite des Ringspaltes einstellbar ist, z. B. durch einen kegelartigen Abschnitt, der an dem ersten Rohr und/oder an dem zweiten Rohr vorgesehen sein kann.

Es kann vorteilhaft sein, wenn das erste und das zweite Rohr miteinander verschraubbar sind. Dies kann zum einen der Montage der Rohranordnung dienen. Verschraubungen können besonders einfach zu fertigen und zu montieren sein. Zum anderen kann durch eine Verschraubung zusätzlich die Einstellbarkeit der Breite des Ringspaltes erreicht werden, da das erste und das zweite Rohr durch Verschrauben axial zueinander verschoben werden können. Es ist denkbar, dass das erste Rohr ein erstes Gewinde aufweist. Es ist des Weiteren denkbar, dass das zweite Rohr ein zweites Gewinde aufweist. Das erste und das zweite Gewinde können dazu konfiguriert sein miteinander einzugreifen.

. Es kann vorteilhaft sein, wenn die Rohranordnung eine Rotationsfixierung umfasst. Die Rotationsfixierung kann dazu konfiguriert sein, im miteinander verschraubten Zustand eine Verdrehung der beiden Rohre relativ zueinander zu blockieren und/oder zu bremsen. Dadurch kann die Stellung der beiden Rohre relativ zueinander, insbesondere eine Breite des Ringspalts, fixiert werden. Beispielsweise kann die Rotationsfixierung eine Feststellschraube umfassen.

Die Anmeldung bezieht sich auch auf eine Verpackungsmaschine, die zum Herstellen von Verpackungen aus mindestens einer Folie konfiguriert ist und mindestens eine Saugdüse der vorstehend beschriebenen Art umfasst. In einer solchen Verpackungsmaschine können eine oder mehrere solcher Saugdüsen besonders vorteilhaft einsetzbar sein.

Die Erfindung bezieht sich auf eine Saugdüse und auf eine Verpackungsmaschine der vorstehend beschriebenen Art. Im Folgenden wird eine vorteilhafte Ausführungsform beispielhaft anhand von Zeichnungen näher erläutert.
- Figur 1: zeigt eine schematische Seitenansicht einer Verpackungsmaschine.
- Figur 2: zeigt eine schematische, perspektivische Ansicht von zwei Saugdüsen.
- Figur 3: zeigt eine schematische Schnittansicht einer der zwei Saugdüsen aus der Figur 2
- Figur 3A: zeigt eine schematische Detailansicht eines Abschnitts aus der Figur 3.

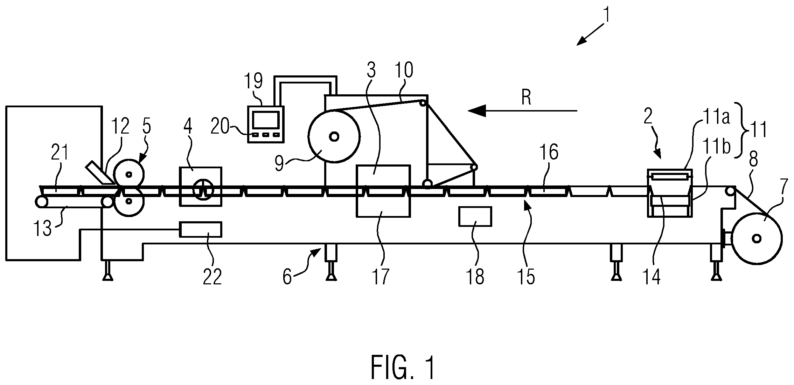

Figur 1 zeigt in schematischer Ansicht eine erfindungsgemäße Verpackungsmaschine 1, die, wie im vorliegenden Ausführungsbeispiel, eine Tiefziehverpackungsmaschine sein kann. Die Verpackungsmaschine 1 kann eine Formstation 2, eine Siegelstation 3, eine Querschneideinrichtung 4 und eine Längsschneideinrichtung 5 aufweisen. Diese können in der genannten Reihenfolge in einer Arbeitsrichtung R an einem Maschinengestell 6 angeordnet sein.

Eingangsseitig kann an dem Maschinengestell 6 eine Zufuhrrolle 7 vorgesehen sein, von der eine erste Folie 8 abgezogen werden kann. Im Bereich der Siegelstation 3 kann ein Folienspeicher 9 vorgesehen sein, von dem eine zweite Folie 10 als Deckelfolie abgezogen werden kann. Ausgangsseitig kann an der Verpackungsmaschine 1 eine Abfuhreinrichtung 13, z. B. in Form eines Transportbandes, vorgesehen sein, mit der fertige, vereinzelte Verpackungen 21 abtransportiert werden können. Ferner kann die Verpackungsmaschine 1 eine nicht dargestellte Vorschubeinrichtung aufweisen, welche die erste Folie 8 ergreifen und vorzugsweise in einem Hauptarbeitstakt taktweise in der Arbeitsrichtung R weitertransportieren kann. Die Vorschubeinrichtung kann zum Beispiel durch seitlich angeordnete Transportketten, vorzugsweise Klammerketten, realisiert sein.

Wie in der dargestellten Ausführungsform gezeigt, kann die Formstation 2 als eine Tiefziehstation ausgebildet sein. Darin können durch Tiefziehen eine oder mehrere Verpackungsmulden 14 in die erste Folie 8 geformt werden. Dazu kann die Formstation 2 ein Formwerkzeug 11 umfassen. Das Formwerkzeug 11 kann ein erstes Teilwerkzeug 11a, im vorliegenden Ausführungsbeispiel ein Oberwerkzeug 11a, und ein zweites Teilwerkzeug 11b, im vorliegenden Ausführungsbeispiel ein Unterwerkzeug 11b, aufweisen. Die erste Folie 8 kann zwischen dem Oberwerkzeug 11a und dem Unterwerkzeug 11b hindurch gefördert werden.

Die Formstation 2 kann derart ausgebildet sein, dass in einer Richtung senkrecht zur Arbeitsrichtung R mehrere Verpackungsmulden 14 nebeneinander gebildet werden können. In Arbeitsrichtung R hinter der Formstation 2 kann eine Einlegestrecke 15 vorgesehen sein. Dort können die in die erste Folie 8 geformten Verpackungsmulden 14 mit Produkt 16 befüllt werden.

Die Siegelstation 3 kann eine verschließbare Kammer 17 aufweisen, in der eine Atmosphäre in den Verpackungsmulden 14 vor dem Versiegeln zum Beispiel durch Gasspülen mit einem Austauschgas oder mit einem Austausch-Gasgemisch ersetzt werden kann.

Die Querschneideinrichtung 4 kann als Stanze ausgebildet sein, welche dazu eingerichtet sein kann, die erste Folie 8 und die zweite Folie 10 in einer Richtung quer zur Arbeitsrichtung R zwischen benachbarten Verpackungsmulden 14 durchtrennen. Dabei kann die Querschneideinrichtung 4 derart konfiguriert sein, dass die erste Folie 8 nicht über die gesamte Breite aufgeteilt wird, sondern zumindest in einem Randbereich nicht durchtrennt wird. Dies kann einen kontrollierten Weitertransport durch die Vorschubeinrichtung ermöglichen.

Die Längsschneideinrichtung 5 kann, wie in der dargestellten Ausführungsform, als eine rotierende Rundmesseranordnung ausgebildet sein, mit der die erste Folie 8 und die zweite Folie 10 zwischen benachbarten Verpackungsmulden 14 und am seitlichen Rand der ersten Folie 8 durchtrennt werden kann, wodurch hinter der Längsschneideinrichtung 5 vereinzelte Verpackungen 21 vorliegen können.

Die Verpackungsmaschine 1 kann des Weiteren wenigstens eine, im vorliegenden Ausführungsbeispiel zwei, Saugdüsen 12 umfassen. Die Saugdüse 12 bzw. die Saugdüsen 12 können an einem Ort entlang der Arbeitsrichtung R angeordnet sein, an dem vereinzelte Verpackungen 21 erzeugt werden. Insbesondere kann die Saugdüse 12 stromabwärts der Längsschneideinrichtung 5 angeordnet sein. Die Verpackungsmaschine 1 kann ein pneumatisches System 22 umfassen, z. B. um verschiedene Aktoren mit Druckluft zu versorgen. Die Saugdüse 12 kann an das pneumatische System 22 angeschlossen sein.

Die Verpackungsmaschine 1 kann ferner eine Steuereinheit 18 enthalten. Sie kann dazu konfiguriert sein, die in der Verpackungsmaschine 1 ablaufenden Prozesse zu steuern und/oder zu überwachen. Außerdem kann eine Anzeigevorrichtung 19 vorzugsweise mit Bedienelementen 20 vorgesehen und dazu eingerichtet sein, Prozessabläufe in der Verpackungsmaschine 1 für bzw. durch einen Bediener zu visualisieren bzw. zu beeinflussen.

Die generelle Arbeitsweise der Verpackungsmaschine 1 kann wie im Folgenden kurz dargestellt ablaufen.

Die erste Folie 8 kann von der Zufuhrrolle 7 abgezogen und durch die Vorschubeinrichtung in die Formstation 2 transportiert werden. In der Formstation 2 können durch Tiefziehen eine oder mehrere Verpackungsmulden 14 in der ersten Folie 8 gebildet werden. Dabei kann die erste Folie 8 zunächst erwärmt werden, vorzugsweise durch eine Heizvorrichtung 12. Das Tiefziehen der Mulde 14 kann durch Einleiten von Druckluft in das Formwerkzeug 11, insbesondere in das Oberwerkzeug 11a, unterstützt werden, wie später noch näher erläutert werden wird. Danach können die Verpackungsmulden 14 zu der Einlegestrecke 15 weitertransportiert werden, wo sie mit Produkt 16 befüllt werden können.

Anschließend können die befüllten Verpackungsmulden 14 zusammen mit dem sie umgebenden Bereich der ersten Folie 8 durch die Vorschubeinrichtung in die Siegelstation 3 weitertransportiert werden. Die zweite Folie 10 kann in der Siegelstation 3 als Deckelfolie an die erste Folie 8 angesiegelt werden. Danach kann die zweite Folie 10 mit der Vorschubbewegung der ersten Folie 8 weitertransportiert werden. Dabei kann die zweite Folie 10 von dem Folienspeicher 9 abgezogen werden. Durch das Ansiegeln der Deckelfolie 10 an die Verpackungsmulden 14 können verschlossene Verpackungen 21 entstehen.

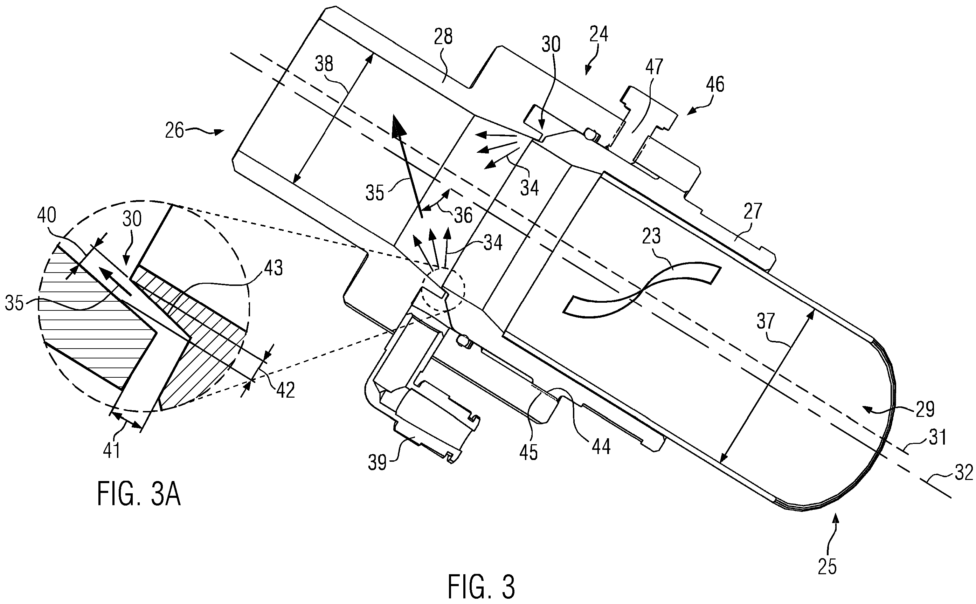

In den Schneideinrichtungen 4, 5 können die Verpackungen 21 vereinzelt werden, indem die Folien 8, 10 in Quer- bzw. Längsrichtung durchtrennt werden. Zum Vereinzeln kann anstelle der Schneidvorrichtungen 4, 5 auch eine Komplettschnittvorrichtung (nicht gezeigt) eingesetzt werden, welche die Verpackungen 21 in einem Schritt vereinzeln kann. Durch die Vereinzelung der Verpackungen 21 entstandene Folienreste 23 (siehe Figur 3) können durch die Saugdüse 12 abgesaugt werden.

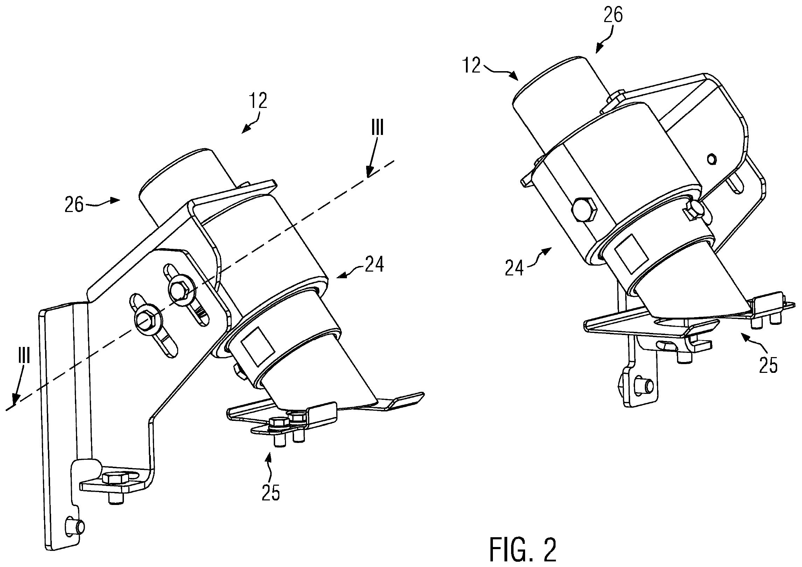

In Figur 2 sind die Saugdüsen 12 in einer perspektivischen Ansicht dargestellt. Es wird erkennbar, dass die Saugdüsen 12 jeweils eine Rohranordnung 24 umfassen können. Es ist ebenfalls zu sehen, dass die Saugdüsen 12 jeweils eine Einlassseite 25 und einer Auslassseite 26 aufweisen können. Die Saugdüsen 12 können derart konfiguriert sein, dass ein Folienreste 23 ansaugender Luftstrom an der Einlassseite 25 in die Saugdüse 12 eintritt und an der Auslassseite 26 der Saugdüse 12 austritt.

In Figur 3 ist eine der Saugdüsen 12 in einer schematischen Schnittansicht dargestellt, wobei die Schnittebene wie durch die Linie III-III in Figur 2 angedeutet verläuft. Wie in Figur 3 zu sehen, kann die Rohranordnung 24 ein erstes Rohr 27 und ein zweites Rohr 28 umfassen. Das erste Rohr 27 und das zweite Rohr 28 können, wie im vorliegenden Ausführungsbeispiel, koaxial zueinander angeordnet sein. Die gemeinsame Achse ist in Figur 3 mit 32 bezeichnet. Eine Richtung die parallel zu der gemeinsamen Achse 32 des ersten Rohrs 27 und des zweiten Rohres 28 verläuft kann als Axialrichtung 33, insbesondere als eine Axialrichtung 33 der Rohranordnung 24, angesehen werden.

Das erste Rohr 27 und das zweite Rohr 28 können einen Saugkanal 29 bilden. Zwischen dem ersten Rohr 27 und dem zweiten Rohr 28 kann ein Ringspalt 30 vorgesehen sein. durch den Ringspalt 30 kann ein Gas, im vorliegenden Ausführungsbeispiel Luft, in den Saugkanal 29 einblasbar sein. Durch das Einblasen durch den Ringspalt 30 kann ein eingeblasener Gasstrom 34, im vorliegenden Ausführungsbeispiel ein eingeblasener Luftstrom 34, erzeugbar sein. Die Rohranordnung 24, insbesondere der Ringspalt 30 kann dazu konfiguriert sein, den eingeblasenen Luftstrom 34 in einer Einblasrichtung 35 in den Saugkanal 29 einzublasen. Die Einblasrichtung 35 kann in einem Einblaswinkel 36 relativ zu der Axialrichtung 33 orientiert sein. Wie in Figur 3 dargestellt, kann der Einblaswinkel 36 kleiner als 90° sein.

Die durch die Saugdüse 12 eingesaugte Luft kann entlang eines Saugweges 31 durch den Saugkanal 29 saugbar sein. Anders ausgedrückt kann die Saugdüse 12 dazu konfiguriert sein, die durch sie eingesaugte Luft entlang des Saugweges 31 durch den Saugkanal 29 zu saugen. Die Querschnittsfläche des Saugkanals 29 kann entlang des Saugweges 31 variieren. Insbesondere kann eine Querschnittsfläche 37 des Saugkanals 24, insbesondere, an der Einlassseite 25 der Saugdüse 12 größer sein als eine Querschnittsfläche 38 des Saugkanals 24 an der Auslassseite 26 der Saugdüse 12.

Die Saugdüse 12 kann einen Druckgasanschluss, im vorliegenden Ausführungsbeispiel einen Druckluftanschluss 39, aufweisen. Wie im vorliegenden Ausführungsbeispiel kann der Druckluftanschluss 39, vorzugsweise gasdicht, mit dem Ringspalt 30 verbunden sein. Der Druckluftanschluss 39 kann dazu konfiguriert sein, Luft zu dem Ringspalt 30 zu leiten.

Der Ringspalt 30 weist eine Breite 40 (siehe Figur 3A) auf. Die Breite 40 kann senkrecht zur Einblasrichtung 35 definiert sein. Die Ausdehnung des Ringspaltes 30 kann des Weiteren durch seine axiale Breite 41 und/oder durch seine radiale Breite 42 beschreibbar sein. Die axiale Breite 41 kann dabei parallel zu der Axialrichtung 33 definiert sein. Die radiale Breite 42 kann senkrecht zur axialen Breite und/oder zu der Axialrichtung 33 definiert sein.

Die Breiten 40, 41, 42 können einstellbar sein. Welche der Breiten 40, 41, 42 konkret einstellbar sind, kann durch geeignete Geometrie in des ersten Rohrs 27 und des zweiten Rohres 28 festgelegt sein. Wie zum Beispiel im vorliegenden Ausführungsbeispiel dargestellt, kann ein kegelartiger Abschnitt 43 an dem ersten Rohr 27 vorgesehen sein. Der kegelartige Abschnitt 43 kann dazu konfiguriert sein, bei einer axialen Verschiebung des ersten Rohrs 27 und des zweiten Rohres 28 relativ zueinander insbesondere die radiale Breite 42 des Ringspaltes 30 einzustellen. Abhängig von der Geometrie des ersten und zweiten Rohres 27, 28 kann mindestens eine der Breiten 41, 42, 43 durch axiale Verschiebung des ersten Rohrs 27 und des zweiten Rohres 28 zueinander einstellbar sein.

Wie in Figur 3 dargestellt, können das erste Rohr 27 und das zweite Rohr 28 miteinander verschraubbar sein. Eine Verschraubung des ersten Rohrs 27 mit dem zweiten Rohr 28 kann zur Montage der beiden Rohre 27, 28 aneinander konfiguriert sein. Alternativ oder zusätzlich kann eine Verschraubung des ersten Rohrs 27 mit dem zweiten Rohr 28 dazu konfiguriert sein, eine axiale Verschiebung der beiden Rohre 27, 28 relativ zueinander zu erreichen. Wie im vorliegenden Ausführungsbeispiel kann das erste Rohr 27 ein erstes Gewinde 44 aufweisen. Das zweite Rohr 28 kann ein zweites Gewinde 45 aufweisen. Das erste Gewinde 44 und das zweite Gewinde 45 können dazu konfiguriert sein, miteinander einzugreifen. Dadurch können das erste Rohr 27 und das zweite Rohr 28 miteinander verschraubbar sein.

Wie erwähnt, kann durch die Verschraubung des ersten Rohrs 27 mit dem zweiten Rohr 28 die Montage der beiden aneinander und/oder die Einstellbarkeit einer der Breiten 41, 42, 43 des Ringspaltes 30 erreicht werden. Es kann vorteilhaft sein, wenn die Rohranordnung 24 eine Rotationsfixierung 46 umfasst. Die Rotationsfixierung 46 kann dazu konfiguriert sein, im miteinander verschraubten Zustand eine Verdrehung der beiden Rohre 27, 28 relativ zueinander zu blockieren und/oder zu bremsen. Beispielsweise kann die Rotationsfixierung 46 eine Feststellschraube 47 umfassen.

## Patentansprüche

1. Saugdüse (12), die zum Ansaugen eines Folienrests (23) einer durch eine Verpackungsmaschine (2) verarbeiteten Folie (8, 10) konfiguriert ist, wobei die Saugdüse (12) eine Rohranordnung (24) umfasst, die ein erstes Rohr (27) und ein zweites Rohr (28) umfasst, wobei das erste und das zweite Rohr (27, 28) koaxial zueinander angeordnet sind und einen Saugkanal (29) bilden, **dadurch gekennzeichnet, dass** zwischen dem ersten und dem zweiten Rohr (27, 28) ein Ringspalt (30) vorgesehen ist, durch welchen ein Gas, vorzugsweise Luft, in den Saugkanal (29) einblasbar ist, **dadurch gekennzeichnet, dass** eine Breite (40, 41, 42) des Ringspaltes (30) einstellbar ist.

2. Saugdüse nach Anspruch 1, wobei der Ringspalt (30) derart konfiguriert ist, dass ein eingeblasener Luftstrom (34) in einer Einblasrichtung (35) in den Saugkanal (29) einblasbar ist, die in einem Einblaswinkel (36) zu einer Axialrichtung (33) der Rohranordnung (24) orientiert ist, wobei der Winkel zwischen 0 Grad und 90 Grad, besonders bevorzugt zwischen 0 Grad und 45 Grad beträgt.

3. Saugdüse nach Anspruch 1, wobei eine Querschnittsfläche (37, 38) des Saugkanals (29) entlang eines Saugweges (31) variiert.

4. Saugdüse nach Anspruch 1, wobei eine Querschnittsfläche (38) des Saugkanals (29) an einer Auslassseite (26) der Saugdüse (12) kleiner ist als an einer Einlassseite (25) der Saugdüse (12).

5. Saugdüse nach Anspruch 1, wobei die Saugdüse (12) einen Druckgasanschluss (39), vorzugsweise einen Druckluftanschluss (39), aufweist.

6. Saugdüse nach Anspruch 5, wobei der Druckgasanschluss (39), vorzugsweise gasdicht, mit dem Ringspalt (30) verbunden ist und dazu konfiguriert ist, ein Gas zu dem Ringspalt (30) zu leiten.

7. Saugdüse nach einem Anspruch 1, wobei die Breite (40, 41, 42) des Ringspaltes (30) durch axiales Verschieben des ersten und des zweiten Rohres (27, 28) relativ zueinander einstellbar ist.

8. Saugdüse nach Anspruch 1, wobei das erste und das zweite Rohr (27, 28) miteinander verschraubbar sind.

9. Saugdüse nach Anspruch 1, wobei das erste Rohr (27) ein erstes Gewinde (44) aufweist.

10. Saugdüse nach Anspruch 1, wobei das zweite Rohr (28) ein zweites Gewinde (45) aufweist.

11. Verpackungsmaschine (1), die zum Herstellen von Verpackungen (21) aus mindestens einer Folie (8, 10) konfiguriert ist und mindestens eine Saugdüse (12) nach einem der vorangehenden Ansprüche umfasst.

## Claims

1. Suction nozzle (12), which is configured to aspirate a residual film (23) of a film (8, 10) processed by a packaging machine (1), wherein the suction nozzle (12) comprises a tube assembly (24) comprising a first tube (27) and a second tube (28), wherein the first and the second tube (27, 28) are arranged coaxially with respect to one another and form a suction channel (29), **characterized in that** an annular gap (30), through which a gas, preferably air, can be blown into the suction channel (29), is provided between the first and the second tube (27, 28), **characterized in that** a width (40, 41, 42) of the annular gap (30) is adjustable.

2. Suction nozzle according to claim 1, wherein the annular gap (30) is configured such that a blown-in air stream (34) can be blown into the suction channel (29) in a blow in direction (35), which is oriented at a blow in angle (36) with respect to an axial direction (33) of the tube assembly (24), wherein the angle is between 0 degrees and 90 degrees, particularly preferred between 0 degrees and 45 degrees.

3. Suction nozzle according to claim 1, wherein a cross-sectional area (37, 38) of the suction channel (29) varies along a suction path (31).

4. Suction nozzle according to claim 1, wherein a cross-sectional area (38) of the suction channel (29) is smaller at an outlet side (26) of the suction nozzle (12) than at an inlet side (25) of the suction nozzle (12).

5. Suction nozzle according to claim 1, wherein the suction nozzle (12) has a pressurized gas connector (39), preferably a pressurized air connector (39).

6. Suction nozzle according to claim 5, wherein the pressurized gas connector (39) is connected to the annular gap (30), preferably in an airtight manner, and is configured to route a gas to the annular gap (30).

7. Suction nozzle according to claim 1, wherein the width (40, 41, 42) of the annular gap (30) is adjustable by axially shifting of the first and the second tube (27, 28) relative to one another.

8. Suction nozzle according to claim 1, wherein the first and the second tube (27, 28) are screwable to one another.

9. Suction nozzle according to claim 1, wherein the first tube (27) has a fist thread (44).

10. Suction nozzle according to claim 1, wherein the second tube (28) has a second thread (45).

11. Packaging machine (1), which is configured to produce packages (21) from at least one film (8, 10) and comprises at least one suction nozzle (12) according to one of the preceding claims.

## Revendications

1. Buse d'aspiration (12) configurée pour aspirer un reste de film (23) d'un film (8, 10) traité par une machine d'emballage (2), où la buse d'aspiration (12) comprend un agencement de tubes (24) qui comprend un premier tube (27) et un second tube (28), où le premier et le second tube (27, 28) sont disposés coaxialement l'un par rapport à l'autre et forment un canal d'aspiration (29), **caractérisé en ce qu'**entre le premier et le second tube (27, 28) est prévu une fente annulaire (30) à travers lequel un gaz, de préférence de l'air, peut être injecté dans le canal d'aspiration (29), **caractérisé en ce qu'**une largeur (40, 41, 42) de la fente annulaire (30) est réglable.

2. Buse d'aspiration selon la revendication 1, où la fente annulaire (30) est configurée de telle manière qu'un flux d'air injecté (34) peut être injecté dans le canal d'aspiration (29) dans une direction d'injection (35) qui est orientée selon un angle d'injection (36) par rapport à une direction axiale (33) de l'agencement de tubes (24), où l'angle est compris entre 0 degré et 90 degrés, particulièrement préférentiellement entre 0 degré et 45 degrés.

3. Buse d'aspiration selon la revendication 1, où une surface de section transversale (37, 38) du canal d'aspiration (29) varie le long d'un trajet d'aspiration (31).

4. Buse d'aspiration selon la revendication 1, où une surface de section transversale (38) du canal d'aspiration (29) est plus petite sur un côté de sortie (26) de la buse d'aspiration (12) que sur un côté d'entrée (25) de la buse d'aspiration (12).

5. Buse d'aspiration selon la revendication 1, où la buse d'aspiration (12) présente un raccord de gaz comprimé (39), de préférence un raccord d'air comprimé (39).

6. Buse d'aspiration selon la revendication 5, où le raccord de gaz comprimé (39) est relié, de préférence de manière étanche au gaz, à la fente annulaire (30) et est configuré pour acheminer un gaz vers la fente annulaire (30).

7. Buse d'aspiration selon la revendication 1, où la largeur (40, 41, 42) de la fente annulaire (30) est réglable par déplacement axial du premier et du second tube (27, 28) l'un par rapport à l'autre.

8. Buse d'aspiration selon la revendication 1, où le premier et le second tube (27, 28) peuvent être vissés l'un à l'autre.

9. Buse d'aspiration selon la revendication 1, où le premier tube (27) présente un premier filetage (44).

10. Buse d'aspiration selon la revendication 1, où le second tube (28) présente un second filetage (45).

11. Machine d'emballage (1) qui est configurée pour la fabrication d'emballages (21) à partir d'au moins un film (8, 10) et comprend au moins une buse d'aspiration (12) selon l'une des revendications précédentes.
